# EUROPÄISCHE PATENTSCHRIFT

(11) **EP 2 473 078 B1**
(45) Veröffentlichungstag und Bekanntmachung des Hinweises auf die Patenterteilung: **04.03.2015**
(21) Anmeldenummer: 10771632.6
(22) Anmeldetag: 31.08.2010
(51) Int. Cl.: A47B 97/00, F21V 33/00, F21V 23/04, F21Y 101/02

(54) **MÖBEL MIT LICHTSTEUERUNG**
PIECE OF FURNITURE WITH LIGHT CONTROL
MEUBLE À COMMANDE LUMINEUSE

(30) Priorität: 31.08.2009 DE 202009005216 U
(43) Veröffentlichungstag der Anmeldung: 11.07.2012
(73) Patentinhaber: Hülsta-Werke Hüls GmbH & Co. KG, 48703 Stadtlohn (DE)
(72) Erfinder: HÜLS, Ludwig, 48653 Coesfeld (DE)
(74) Vertreter: Habbel, Ludwig
(86) Internationale Anmeldenummer: PCT/DE2010/001027
(87) Internationale Veröffentlichungsnummer: WO 2011/023184

(56) Entgegenhaltungen:
- EP-A2- 1 408 276
- EP-A2- 2 045 510
- WO-A1-2006/038169
- WO-A1-2006/056814
- US-A1- 2006 086 888
- US-A1- 2006 176 697

## Beschreibung

Die Erfindung betrifft ein Möbel nach dem Oberbegriff des Anspruchs 1.

Aus der WO 2006/038169 A1 ist ein gattungsgemäßes Möbel in Form eines von innen beleuchteten Sitzmöbels bekannt. Durch die Sensoranordnung soll die Nutzungsdauer des Sitzmöbels erfasst werden. In Abhängigkeit davon, wie lange ein Benutzer bereits auf einem Sitzmöbel sitzt, werden unterschiedliche Lichteffekte gesteuert.

Aus der Praxis sind beispielsweise Schrankmöbel bekannt, bei denen als Beleuchtungseinrichtung eine Lichtleiste mit mehreren darin zusammengefassten Lichtquellen in einem Einlegeboden angeordnet ist. Zudem ist ein als Bewegungsmelder ausgestalteter Sensor vorgesehen, der bei Öffnung der Tür die Lichtleiste aus einem ausgeschalteten, nicht strahlenden Zustand auf die vorgegebene Helligkeit einschaltet. Diese Helligkeit wird im Rahmen des vorliegenden Vorschlags als Bedienungshelligkeit bezeichnet und bietet dem Benutzer eine Bedienungserleichterung, indem das Schrankinnere unabhängig von einer im Raum herrschenden Helligkeit besser ausgeleuchtet ist. Der Sensor reagiert dabei sowohl auf eine Bewegung der Tür selbst, also eines Teils des Schrankes, als auch auf Bewegungen von so genannten Fremdkörpern, also Körpern, die nicht Teil des Schrankes sind, wie beispielsweise der Benutzer selbst.

Dabei kann allerdings als nachteilig empfunden werden, dass die erzielte Helligkeit der eingeschalteten Beleuchtungseinrichtung als zu hell empfunden wird, beispielsweise wenn in einem dunklen Schlafzimmer durch die Helligkeit der eingeschalteten Beleuchtungseinrichtung Schläfer gestört werden.

Der Erfindung liegt die Aufgabe zugrunde, ein gattungsgemäßes Möbel dahingehend zu verbessern, dass es eine für den Benutzer möglichst einfache Handhabung der Beleuchtungseinrichtung in Anpassung an unterschiedliche Helligkeitsbedürfnisse ermöglicht.

Die Aufgabe wird durch ein Möbel mit den Merkmalen des Anspruchs 1 gelöst.

Die Erfindung schlägt mit anderen Worten vor, jeweils nur einen Teil der Lichtquellen der Beleuchtungseinrichtung einzuschalten, nämlich in Abhängigkeit davon, wo sich der Fremdkörper jeweils gerade befindet. Die Hand des Benutzers kann einen derartigen Fremdkörper darstellen, und der Schaltvorgang wird durch eine entsprechende Ausgestaltung der Sensoranordnung in an sich bekannter Weise berührungslos ausgelöst. Somit kann die Beleuchtung beispielsweise bei entsprechender Ausgestaltung der Steuerung derart erfolgen, dass die Lichtquellen nur dort eingeschaltet werden, wo sich der Fremdkörper befindet, also wo sich momentan die Hand des Benutzers befindet.

Vorschlagsgemäß wird die Beleuchtungseinrichtung genutzt, um ein im Möbel vorgesehenes Fach auszuleuchten, also Licht im Inneren des Möbels wirken zu lassen, so dass unabhängig von den äußeren Beleuchtungsverhältnissen stets sichergestellt ist, dass dort, wo der Benutzer im Möbel hantiert, eine hervorragende Ausleuchtung seine Tätigkeit erleichtert. Insbesondere kleine, kommodenartige Möbel können derartige Fächer aufweisen. Es kann vorgesehen sein, nicht nur das Innere eines Möbels auszuleuchten, so dass beispielsweise die Beleuchtungseinrichtung in Art eines ein Lauflichts vor einem Schrank den Schrank von außen und / oder den Bodenbereich vor dem Schrank ausleuchten kann, wo sich der Benutzer befindet.

Die vorschlagsgemäße Ausgestaltung des Möbels sieht vor, dass die Lichtquelle in wenigstens zwei Stufen eingestellt werden kann, nämlich zwischen einer Grundhelligkeit und einer höheren Helligkeitsstufe umgeschaltet werden kann. Vorschlagsgemäß ist zudem vorgesehen, dass die heller ausgeleuchtete Stelle mit der Stelle identisch ist, an welcher sich der durch die Sensoranordnung erfasste Fremdkörper befindet.

So kann beispielsweise vorteilhaft das Möbel zur Aufnahme technischer Geräte vorgesehen sein. Beispielsweise können Geräte der Unterhaltungselektronik mit Hilfe einer gewissen Grundhelligkeit angeleuchtet werden, so dass einerseits die Bedienung der Geräte von vornherein erleichtert wird und andererseits beispielsweise in physiologisch vorteilhafter Ausgestaltung des Möbels beim Betrachten von Fernsehschirmen ein unerwünscht hoher Kontrast zwischen dem Fernsehschirm und der Umgebung vermieden werden kann und stattdessen vielmehr eine geeignete Hintergrundbeleuchtung um den Fernsehschirm herum geschaffen werden kann. Ausgehend von dieser Grundhelligkeit bewirkt dann das erwähnte, sensorgesteuerte Einschalten der Beleuchtung dort, wo der Fremdkörper wahrgenommen wird, wo sich also beispielsweise die Hand des Benutzers befindet, eine Helligkeitssteigerung, so dass als Einschaltvorgang im Rahmen des vorliegenden Vorschlags nicht nur der Umschaltvorgang von einer vollständig ausgeschalteten Lichtquelle zu deren Licht aussendenden Zustand verstanden wird, sondern auch das Umschalten von einer Grundhelligkeit dieser Lichtquelle in die höhere Helligkeitsstufe der Bedienungshelligkeit.

Wenn beispielsweise im Möbel technische Geräte angeordnet sind, welche der Benutzer bedienen möchte, so wird automatisch eine dafür geeignete Helligkeit eingeschaltet, wo sich gerade die Hand des Benutzers befindet, so dass das Gerät bzw. ein Teil des Gerätes ausreichend hell ausgeleuchtet ist. Auch wenn Gegenstände in das Möbel eingebracht oder aus dem Möbel herausgenommen werden sollen, ist mittels der vorschlagsgemäßen Ausgestaltung des Möbels auf einfache Weise sichergestellt, dass eine jeweils ausreichende Helligkeit dort vorhanden ist, wo der Benutzer momentan hantiert. Dabei ist diese Bedienungshelligkeit jedoch auf den vorgenannten Bereich beschränkt, so dass ein eventuell als unangenehm empfundener Helligkeitseindruck vermieden werden kann, da die übrigen Lichtquellen der Beleuchtungseinrichtung nicht eingeschaltet werden.

Wenn der Fremdkörper bewegt wird, ändert sich dementsprechend auch der ausgeleuchtete Bereich des Möbels, da mit der Bewegung des Fremdkörpers die Lichtquellen des zunächst eingeschalteten Anteils der Beleuchtungseinrichtung ausgeschaltet werden und die Lichtquellen eines anderen Anteils der Beleuchtungseinrichtung eingeschaltet werden.

Als "Einschalten" wird dabei die Erhöhung der Helligkeit der jeweiligen Lichtquellen bezeichnet. Diese können entweder von einem nicht strahlenden Zustand in einen strahlenden Zustand "eingeschaltet" werden, oder von einer Grundhelligkeit auf die demgegenüber höhere Bedienungshelligkeit "eingeschaltet" werden. Später, wenn der Fremdkörper den betreffenden Erfassungsbereich der Sensoranordnung verlässt, werden sie wieder "ausgeschaltet", also in die ursprüngliche Helligkeit wie den nicht strahlenden Zustand oder die Grundhelligkeit zurückgeschaltet. Somit kann beispielsweise der jeweils eingeschaltete Anteil der Beleuchtungseinrichtung in Art eines ein Lauflichts dem Fremdkörper folgen, wenn dieser durch den Erfassungsbereich der Sensoranordnung bewegt wird. Gegebenenfalls kann das Ausschalten zeitverzögert erfolgen, so dass beispielsweise dem Benutzer noch Zeit verbleibt, das Ergebnis einer von ihm vorgenommenen Handlung zu überprüfen.

Als Lichtquellen kommen nahezu beliebige Leuchtmittel in Frage, wobei insbesondere Lichtquellen mit einer geringen maximalen Strahlkraft ausreichend sein können, so dass dementsprechend Lichtquellen mit kleinen baulichen Abmessungen und geringer Wärmeabgabe verwendet werden können.

Physiologisch vorteilhaft können Lichtquellen verwendet werden, die stufenlos gedimmt oder in unterschiedlichen Helligkeitsstufen betrieben werden können. Die Helligkeitsübergänge zwischen dem ausgeschalteten und dem eingeschalteten Zustand müssen somit nicht sprunghaft erfolgen, sondern können sanft, also stufenlos oder in mehreren und vorzugsweise möglichst vielen Helligkeitsstufen erfolgen.

Vorteilhaft kann die Beleuchtungseinrichtung durch eine Vielzahl von LEDs gebildet sein. Aufgrund ihrer geringen Wärmeentwicklung sind LEDs für ihren Einsatz im Möbelbereich hervorragend geeignet. Zudem kann durch die Anordnung einer Vielzahl von LEDs, ggf. unterschiedlich farbiger LEDs, die Einstellung unterschiedlicher Lichtfarben erfolgen, oder es kann eine entsprechend feinfühlige, nahezu stufenlose Steuerung der Lichtquellen erfolgen, also ein nahezu unmerklicher Übergang von der einen zur anderen Lichtquelle in Abhängigkeit beispielsweise von einer Bewegung der Hand des Benutzers.

Der Erfassungsbereich der Sensoranordnung kann vorteilhaft vor das Möbel reichen, so dass die Beleuchtungseinrichtung bereits anteilig - insbesondere nur bereichsweise, nämlich in der Nähe des Benutzers - eingeschaltet wird, noch bevor der Benutzer eine Möbeltür bzw. einen Griff berührt oder in das Möbel hineingreift, um dort zu hantieren.

In an sich bekannter Weise kann die Sensoranordnung vorteilhaft Infrarotsensoren aufweisen, insbesondere mehrere Infrarotsensoren. Auf diese Weise sind handelsübliche und vergleichsweise preisgünstige sowie sehr funktionssichere Sensoren verwendbar. Alternativ dazu können jedoch auch andere geeignete Sensoren verwendet werden, beispielsweise Ultraschallsensoren, Lichtschranken oder dergleichen, oder es kann ein optischer Sensor verwendet werden, welcher es ermöglichen kann, beispielsweise mittels einer automatischen Bildauswertung, auch bei Verwendung von nur einem einzigen Sensor unterschiedliche Lichtquellen in Abhängigkeit davon zu schalten, wo gerade innerhalb des optischen Erfassungsbereichs des Sensors der Fremdkörper erfasst wurde. Jedenfalls ist vorschlagsgemäß vorgesehen, anders als bei reinen Bewegungsmeldern nicht eine komplette Beleuchtungseinrichtung ein- oder auszuschalten, sondern stets nur einen Teil der Lichtquellen einzuschalten, wenn ein Fremdkörper in den Erfassungsbereich der Sensoranordnung geraten ist.

Es kann vorgesehen sein, eine Lichtquelle nur einem bestimmten von mehreren Sensoren zuzuordnen. Aus einer Reihe von Lichtquellen wird daher eine bestimmte Lichtquelle immer nur dann eingeschaltet, wenn dieser bestimmte Sensor einen Fremdkörper erfasst. Alternativ dazu kann vorgesehen sein, eine Lichtquelle zwei Sensoren zuzuordnen, so dass sie eingeschaltet wird, wenn auch nur einer dieser beiden Sensoren einen Fremdkörper erfasst. Auf diese Weise können überlappende Erfassungsbereiche geschaffen werden, so dass ein besonders fließender Übergang erzielt werden kann, wenn beispielsweise die Lichtquellen wie ein Lauflicht der Bewegung einer Hand folgend ein- und wieder ausgeschaltet werden.

Hintergrund dieser vorteilhaften Ausgestaltung des Möbels ist die Überlegung, dass im privaten Umfeld häufig eine vergleichsweise geringe Helligkeit ausreichend ist, sei es die Grundhelligkeit der Beleuchtungseinrichtung oder die Bedienungshelligkeit der "eingeschalteten" Lichtquellen. Ganz anders ist die Situation in Möbelhäusern oder vergleichbaren Verkaufsräumen von Möbeln: Dort ist üblicherweise zur Präsentation der Möbel eine vergleichsweise hohe Grundhelligkeit gegeben, so dass ggf. die von der Beleuchtungseinrichtung geschaffene Grundhelligkeit in einem derartigen Umfeld vom potenziellen Käufer kaum wahrgenommen werden kann, oder auch die Bedienungshelligkeit der "eingeschalteten" Lichtquellen in einem derartig hellen Umfeld vom potenziellen Käufer kaum wahrnehmbar ist, da diese Helligkeit dazu ausgelegt ist, in einer vergleichsweise dämmrigen Umgebung eine die Bedienung der elektronischen Geräte ausreichende Helligkeit bereitzustellen, ohne jedoch den Nutzer in unerwünschtem Maße zu blenden. Aus diesen vorgenannten Gründen kann vorgesehen sein, die Helligkeit der Beleuchtungseinrichtung anpassen zu können und beispielsweise einen "Demonstrationsmodus" mit höherer Helligkeit und einen "Betriebsmodus" mit demgegenüber geringerer Helligkeit einstellen zu können, der dann dem späteren Dauerbetrieb bei der üblichen Nutzung des Möbels angepasst ist.

Ein Ausführungsbeispiel der Erfindung wird anhand der rein schematischen Darstellung nachfolgend näher erläutert.

Dabei ist mit 1 insgesamt ein Möbel bezeichnet, welches beispielsweise als TV-Möbel genutzt werden soll und eine obere Ablage 2 aufweist, die zwischen zwei Wangen 3 gehalten ist und auf der ein TV-Gerät aufgestellt werden kann. Unterhalb dieser Ablage 2 ist ein Fach 4 vorgesehen, mit einem Fachboden 5, wobei dieses Fach beispielsweise zur Aufnahme eines Videorekorders o. dgl. dienen kann.

In die Unterseite der Ablage 2 ist eine Leiste 6 eingelassen, welche eine Vielzahl von einzelnen Lichtquellen 7 aufweist, die insgesamt eine Beleuchtungseinrichtung in Form einer LED-Leiste bilden, die sich über nahezu die gesamte Breite des Faches 4 erstreckt. Weiterhin ist in der Leiste 6 eine Mehrzahl von Infrarotsensoren 8 vorgesehen, wobei sämtliche Infrarotsensoren 8 gemeinsam eine Sensoranordnung bilden und wobei vorgesehen ist, dass jeder Infrarotsensor 8 jeweils nur einem Teil der gesamten Beleuchtungseinrichtung, also nur einigen der Lichtquellen 7 steuerungstechnisch zugeordnet ist.

Je nachdem wo nun ein Fremdkörper in das Fach 4 eingeführt wird, wird dort die Helligkeit der Lichtquellen 7 erhöht, wo sich die Hand befindet.

Die dazu vorgesehene Steuerung berücksichtigt die Zeit, innerhalb derer sich die von den Infrarotsensoren 8 erfassten Werte ändern. Wird beispielsweise ein elektronisches Gerät im Fach 4 betrieben und erwärmt sich dieses Gerät nach dem Einschalten, so findet diese Temperaturänderung vergleichsweise langsam statt, jedenfalls im Vergleich zu der Temperaturänderung, die durch die Infrarotsensoren 8 erfasst wird, wenn ein in das Fach 4 eingebrachter Fremdkörper im Fach 4 bewegt wird. Die langsame Erwärmung des im Fach 4 befindlichen technischen Gerätes führt also nicht dazu, dass dieses Gerät heller ausgeleuchtet wird, weil die dortigen Lichtquellen 7 eingeschaltet werden würden. Sie verbleiben vielmehr in ihrer "ausgeschalteten" Helligkeit, also entweder tatsächlich im ausgeschalteten, nicht leuchtenden Zustand oder in der Grundhelligkeit.

Die Energieversorgung der Leiste 6 und der darin vorgesehenen Lichtquellen 7 und Infrarotsensoren 8 sowie für die elektronische Steuerung kann vorteilhaft dadurch sichergestellt werden, dass das Möbel 1 mit einem eigenen Anschluss an den Netzstrom ausgestattet ist. Dieser Anschluss kann insbesondere vorteilhaft dazu genutzt werden, innerhalb des Möbels 1 eine eigene Spannungsverteilung zur Verfügung zu stellen, so dass elektronische Geräte, wie der erwähnte Fernsehschirm oder der erwähnte Videorekorder innerhalb des Möbels 1 an diese Spannungsverteilung angeschlossen werden können, so dass einerseits am Aufstellungsort des Möbels 1 nur wenige Steckdosen benötigt werden und zudem ein Kabelgewirr von einer Vielzahl von Kabeln vermieden werden kann, da die Kabel der elektronischen Geräte sämtlich innerhalb des Möbels 1 verlegt werden können und lediglich das Netzanschlusskabel sowie ggf. ein Antennenkabel vom Möbel 1 nach außen verlaufen.

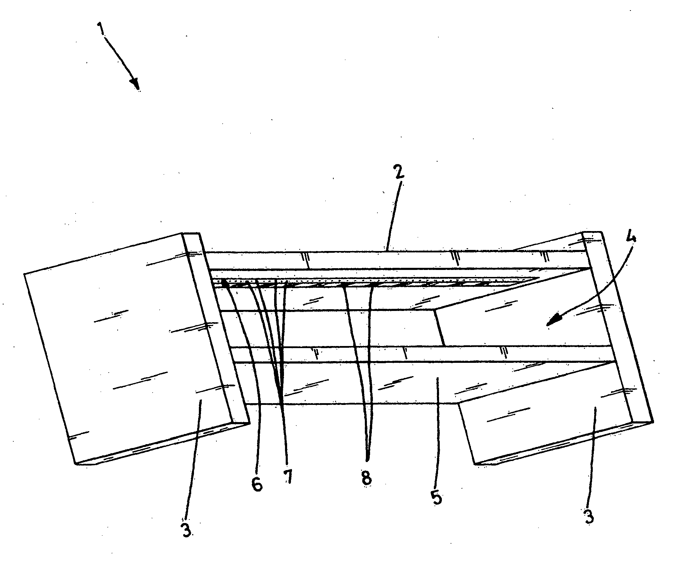

## Patentansprüche

1. Möbel,
mit einer mehrere Lichtquellen aufweisenden Beleuchtungseinrichtung,
die in mehrere Anteile aufgeteilt ist, welche jeweils wenigstens eine Lichtquelle (7) umfassen und einzeln ein- und ausschaltbar sind,
und mit einer Fremdkörper berührungslos erfassenden Sensoranordnung,
sowie mit einer Steuerung, welche die Beleuchtungseinrichtung abhängig von den durch die Position des Fremdkörpers ausgelösten Signalen der Sensoranordnung einschaltet, also auf einen höheren Helligkeitswert bringt, und ausschaltet, also auf einen Helligkeitswert bringt, welcher niedriger ist als im eingeschalteten Zustand,
**dadurch gekennzeichnet,**
**dass** die Sensoranordnung unterschiedliche Positionen des Fremdkörpers unterscheidend ausgestaltet ist,
und **dass**
wobei die Beleuchtungseinrichtung derart mit der Sensoranordnung wirksam verschaltet ist, dass in Abhängigkeit von der jeweils erfassten Position des Fremdkörpers nur ein bestimmter Anteil der Lichtquellen (7) eingeschaltet wird und dann wieder ausgeschaltet wird, wenn der Fremdkörper von dieser Position entfernt wird,
die Beleuchtungseinrichtung zur Ausleuchtung eines im Möbel (1) vorgesehenen Fachs (4) angeordnet ist,
die Beleuchtungseinrichtung mit einer Grundhelligkeit betreibbar ist und die Steuerung derart ausgestaltet ist, dass der durch die Sensoranordnung ausgelöste so genannte Einschaltvorgang im Vergleich zu der Grundhelligkeit eine Helligkeitserhöhung der angesteuerten Lichtquellen (7) bewirkt,
und **dass** die Steuerung derart ausgestaltet ist, dass diejenigen Lichtquellen (7) eingeschaltet werden, in deren Nähe die Sensoranordnung den Fremdkörper erfasst,
und **dass** je nachdem, wo der Fremdkörper in das Fach (4) eingeführt wird, dort die Helligkeit der Lichtquellen (7) erhöht wird.

2. Möbel nach Anspruch 1,
**dadurch gekennzeichnet,**
**dass** die Beleuchtungseinrichtung durch eine Vielzahl von LEDs gebildet ist.

3. Möbel nach einem der vorhergehenden Ansprüche,
**dadurch gekennzeichnet,**
**dass** die Sensoranordnung mehrere Infrarot-Sensoren (8) aufweist.

4. Möbel nach einem der vorhergehenden Ansprüche,
**dadurch gekennzeichnet,**
**dass** die Sensoranordnung sowie die Beleuchtungseinrichtung in einer Leiste (6) zusammengefasst sind.

5. Möbel nach einem der vorhergehenden Ansprüche,
**dadurch gekennzeichnet,**
**dass** die Helligkeit der Beleuchtungseinrichtung in wenigstens zwei Stufen einstellbar ist,
wobei je nach eingestelltem Zustand die Beleuchtungseinrichtung in ein erstes oder in ein zweites, demgegenüber helleres Helligkeitsniveau einschaltbar ist.

6. Möbel nach einem der vorhergehenden Ansprüche,
**dadurch gekennzeichnet,**
**dass** die Helligkeit der Beleuchtungseinrichtung über mehrere Zwischenstufen oder stufenlos einschartbar ist.

7. Möbel nach einem der vorhergehenden Ansprüche,
**dadurch gekennzeichnet,**
**dass** die Sensoranordnung einen vor die Front des Möbels reichenden Erfassungsbereich aufweist.

## Claims

1. Article of furniture
with an illuminating device comprising several light sources, which is divided into several sections, each of which contains at least one light source (7) and which can be switched on and off individually, and with a sensor arrangement which detects foreign bodies without contact and with a control system which switches on the illuminating device, i.e. increases its light value, depending on the signals from the sensor arrangement triggered by the position of the foreign body, and switches it off again, i.e. reduces its light value to a figure lower than that in the switched-on state,
**characterised in that** the arrangement of sensors is designed to distinguish between different positions of the foreign body, and **in that**, where the illuminating device is effectively interconnected with the sensor arrangement, only a certain number of the light sources (7) are switched on depending on the detected position of the foreign body, and then off again when the foreign body moves away from that position,
that the illuminating device is arranged to illuminate a compartment (4) provided in the article of furniture (1), the illuminating device can be operated at a certain basic brightness, and the control system is designed in such a way that the so-called switch-on operation triggered by the sensor arrangement causes an increase in the brightness of the controlled light sources (7) in relation to the basic degree of brightness,
and that the control system is designed in such a way that the light sources (7) switched on are those in whose vicinity the sensor arrangement detects the foreign body, and that, depending on where the foreign body is introduced into the compartment (4), the brightness of the light sources (7) is increased.

2. Article of furniture in accordance with claim 1, **characterised in that** the illuminating device is formed by a number of LEDs.

3. Article of furniture in accordance with any of the above claims, **characterised in that** the arrangement of sensors contains several infrared sensors (8).

4. Article of furniture in accordance with any of the above claims, **characterised in that** the arrangement of sensors and the illuminating device are grouped together in a strip (6).

5. Article of furniture in accordance with any of the above claims, **characterised in that** the brightness of the illuminating device can be set in at least two stages, where, depending on the setting, the illuminating device can be switched on at a first or a second level of brightness with reference to this setting.

6. Article of furniture in accordance with any of the above claims, **characterised in that** the brightness of the illuminating device can be switched on via a number of stages or increased continuously.

7. Article of furniture in accordance with any of the above claims, **characterised in that** the arrangement of sensors has a range of detection extending before the front of the article of furniture.

## Revendications

1. Meuble
comprenant un équipement d'éclairage présentant plusieurs sources lumineuses, équipement qui est divisé en plusieurs parties incluant au moins une source de lumière (7) et qu'il est possible d'allumer et d'éteindre individuellement,
et comprenant un ensemble sensoriel qui détecte sans contact les corps étrangers,
ainsi qu'une commande qui allume l'équipement d'éclairage en fonction des signaux que l'ensemble sensoriel a déclenchés en fonction de la position du corps étranger, donc qui le porte vers une valeur de luminosité plus élevée, et qui l'éteint, donc qui le porte vers une valeurs de luminosité moins élevée qu'à l'état allumé.
**caractérisé en ce que** l'ensemble sensoriel est configuré de manière à faire la distinction entre différentes positions du corps étranger,
et **en ce que**,
sachant que l'équipement d'éclairage est connecté de manière efficace avec l'ensemble sensoriel de telle manière qu'en fonction de la position du corps étranger respectivement saisie, seule une partie précise des sources de lumière (7) est allumée puis éteinte à nouveau lorsque l'on éloigne le corps étranger de cette position,
**en ce que** l'équipement d'éclairage est agencé pour illuminer un compartiment (4) prévu dans le meuble (1), que l'équipement d'éclairage peut être exploité avec une luminosité de base et que la commande est configurée de sorte que l'opération d'allumage ainsi nommée déclenchée par l'ensemble sensoriel provoque, comparé à la luminosité de base, une augmentation de la luminosité des sources de lumière excitées (7), et **en ce que** la commande est configurée de sorte que soient allumées les sources de lumière (7) à proximité desquelles l'ensemble sensoriel saisit le corps étranger et que suivant l'endroit où l'on introduit le corps étranger dans le compartiment (4), la luminosité des sources de lumières (7) y soit haussée.

2. Meuble selon la revendication 1, **caractérisé en ce que** l'équipement d'éclairage est formé par un grand nombre de LED.

3. Meuble selon l'une des revendications précédentes, **caractérisé en ce que** l'ensemble sensoriel présente plusieurs sondes (8) infrarouges.

4. Meuble selon l'une des revendications précédentes, **caractérisé en ce que** l'agencement sensoriel ainsi que l'équipement d'éclairage sont réunis dans un bandeau (6).

5. Meuble selon l'une des revendications précédentes, **caractérisé en ce que** la luminosité de l'équipement d'éclairage est réglable sur au moins deux niveaux différents, sachant que suivant l'état réglé l'équipement d'éclairage peut être allumé à un premier niveau ou à une deuxième niveau plus lumineux que le premier.

6. Meuble selon l'une des revendications précédentes, **caractérisé en ce que** l'activation de la luminosité de l'équipement d'éclairage peut passer par plusieurs niveaux intermédiaires ou avoir lieu en continu.

7. Meuble selon l'une des revendications précédentes, **caractérisé en ce que** l'ensemble sensoriel présente une zone de détection s'étendant devant la façade du meuble.
